# EUROPÄISCHE PATENTANMELDUNG

(11) **EP 2 360 810 A2**
(43) Veröffentlichungstag der Anmeldung: **24.08.2011**
(21) Anmeldenummer: 11000170.8
(22) Anmeldetag: 12.01.2011
(51) Int. Cl.: H02J 7/00

(54) **Elektrisches Unterputz-Installationsgerät zur Aufnahme eines mobilen Audio- und Kommunikationsgerätes**

(30) Priorität: 11.02.2010 DE 102010007502
(71) Anmelder: ABB AG, 68309 Mannheim (DE)
(72) Erfinder: Schallenberg, Wolfgang Dipl.-Ing., 40599 Düsseldorf (DE); Wieske, Stefan Dipl.-Ing., 58285 Gevelsberg (DE); Zapp, Robert Dipl.-Ing., 58579 Schalksmühle (DE); Lehnert, Christian, 58239 Schwerte (DE)

(57) **Zusammenfassung**

Es wird ein elektrisches Unterputz-Installationsgerät (1) zur Aufnahme eines mobilen Audio- und Kommunikationsgerätes erster Ausführungsform (21) vorgeschlagen,
- mit einem ein Ladegerät und einen elektrischen 230V-Anschluss beinhaltenden UP-Einsatz (8),
- mit einer Zentralscheibe (2) mit Halterung (3) mit Aufnahmeschacht für das mobile Audio- und Kommunikationsgerät erster Ausführungsform (21),
- mit einem Abdeckrahmen (10),
- mit einer im Aufnahmeschacht angeordneten Steckvorrichtung (9) für die Verbindung mit dem mobilen Audio- und Kommunikationsgerät erster Ausführungsform (21),
- wobei eine auf den Aufnahmeschacht aufsteckbare, eine formschlüssige Abdeckung (11, 13) aufweisende Baueinheit (A, B, C) vorgesehen ist, welche eine Steckvorrichtung (16) für die Verbindung mit der zum Anschluss eines mobilen Audio- und Kommunikationsgerätes dienenden Steckvorrichtung (9) aufweist, welche elektrisch mit einer Micro-USB-Schnittstelle (19) und / oder einem Funkmodul (18) inklusive zugeordneter Antenne (17) verbunden ist, wodurch eine Datensignalverbindung mit einem mobilen Audio- und Kommunikationsgerät zweiter Ausführungsform entweder über eine Drahtverbindung oder via Funk ermöglicht ist.

## Beschreibung

Die Erfindung betrifft ein elektrisches Unterputz-Installationsgerät zur Aufnahme eines mobilen Audio- und Kommunikationsgerätes.

Soll ein elektrisches Unterputz-Installationsgerät zur Aufnahme eines mobilen Audio-und Kommunikationsgerätes geschaffen werden, welches insbesondere zur Aufladung der Akkumulatoren dieses mobilen Audio- und Kommunikationsgerätes dienen soll, besteht prinzipiell das Problem, dass die zur elektrischen Kontaktierung dienende Steckvorrichtung offen zugänglich ist, sobald kein mobiles Audio- und Kommunikationsgerät in die zur Aufnahme vorgesehene Halterung eingesteckt ist. Die Steckvorrichtung ist damit der Verschmutzung ausgesetzt, was zu Fehlfunktionen führen kann.

Der Erfindung liegt die Aufgabe zugrunde, ein gegenüber Verschmutzungen unempfindliches elektrisches Unterputz-Installationsgerät zur Aufnahme eines mobilen Audio- und Kommunikationsgerätes anzugeben.

Diese Aufgabe wird erfindungsgemäß gelöst durch ein elektrisches Unterputz-Installationsgerät zur Aufnahme eines mobilen Audio- und Kommunikationsgerätes erster Ausführungsform,
- mit einem ein Ladegerät und einen elektrischen 230V-Anschluss beinhaltenden UP-Einsatz,
- mit einer Zentralscheibe mit Halterung mit Aufnahmeschacht für das mobile Audio- und Kommunikationsgerät erster Ausführungsform,
- mit einem Abdeckrahmen,
- mit einer im Aufnahmeschacht angeordneten Steckvorrichtung für die Verbindung mit dem mobilen Audio- und Kommunikationsgerät erster Ausführungsform,
- wobei eine auf den Aufnahmeschacht aufsteckbare, eine formschlüssige Abdeckung aufweisende Baueinheit vorgesehen ist, welche eine Steckvorrichtung für die Verbindung mit der zum Anschluss eines mobilen Audio- und Kommunikationsgerätes dienenden Steckvorrichtung aufweist, welche elektrisch mit einer Micro-USB-Schnittstelle und / oder einem Funkmodul inklusive zugeordneter Antenne verbunden ist, wodurch eine Datensignalverbindung mit einem mobilen Audio- und Kommunikationsgerät zweiter Ausführungsform entweder über eine Drahtverbindung oder via Funk ermöglicht ist.

Die mit der Erfindung erzielbaren Vorteile bestehen insbesondere darin, dass die vorgeschlagene formschlüssige Abdeckung zum Einen den zur Aufnahme eines mobilen Audio- und Kommunikationsgerätes dienenden Aufnahmeschacht der Halterung staubdicht abdeckt, zum Anderen zusätzlich einen USB-Adapter und / oder einen Funk-Adapter respektive "Btuetooth®-Adapter" zur Verfügung stellt, was eine zusätzliche drahtgebundene oder drahtlose Datensignalverbindung mit einem mobilen Audio- und Kommunikationsgerät zweiter Ausführungsform ermöglicht. Dies erweitert die Anwendungsmöglichkeit des Unterputz-Installationsgerätes in den Fällen, bei denen kein mobiles Audio- und Kommunikationsgerät erster Ausführungsform eingesteckt ist. Unter einem "Audio- und Kommunikationsgerät zweiter Ausführungsform" wird dabei ein Audio- und Kommunikationsgerät verstanden, welches keine oder eine als USB-Schnittstelle ausgebildete Steckvorrichtung aufweist.

Zweckmäßige Ausgestaltungen der Erfindung sind in den Unteransprüchen gekennzeichnet.

Die Erfindung wird nachstehend an Hand der in der Zeichnung dargestellten Ausführungsbeispiele erläutert. Es zeigen:
- Fig. 1: eine perspektivische Sicht auf ein elektrisches Unterputz-Installationsgerät zur Aufnahme eines mobilen Audio- und Kommunikationsgerätes mit zwei alternativ aufsteckbaren formschlüssigen Abdeckungen,
- Fig. 2: eine perspektivische Sicht auf ein mit einer ersten formschlüssigen Abdeckung versehenes elektrisches Unterputz-Installationsgerät zur Aufnahme eines mobilen Audio- und Kommunikationsgerätes,
- Fig. 3: eine perspektivische Sicht auf ein mit einer zweiten formschlüssigen Abdeckung versehenes elektrisches Unterputz-Installationsgerät zur Aufnahme eines mobilen Audio- und Kommunikationsgerätes,
- Fig. 4: eine perspektivische Sicht auf eine erste formschlüssige Abdeckung,
- Fig. 5: eine perspektivische Sicht auf eine zweite formschlüssige Abdeckung,
- Fig. 6: eine perspektivische Sicht auf eine mit einer Micro-USB-Schnittstelle versehene Baugruppe,
- Fig. 7: eine perspektivische Sicht auf eine mit einer Micro-USB-Schnittstelle und einem zusätzlichen Funkmodul versehene Baugruppe,
- Fig. 8: eine perspektivische Sicht auf eine mit einem Funkmodul versehene Baugruppe,
- Fig. 9: einen Schnitt durch ein elektrisches Unterputz-Installationsgerät zur Aufnahme eines mobilen Audio- und Kommunikationsgerätes,
- Fig. 10: eine perspektivische Sicht auf ein elektrisches Unterputz-Installationsgerät, bei welchem ein mobiles Audio- und Kommunikationsgerät eingesteckt ist.

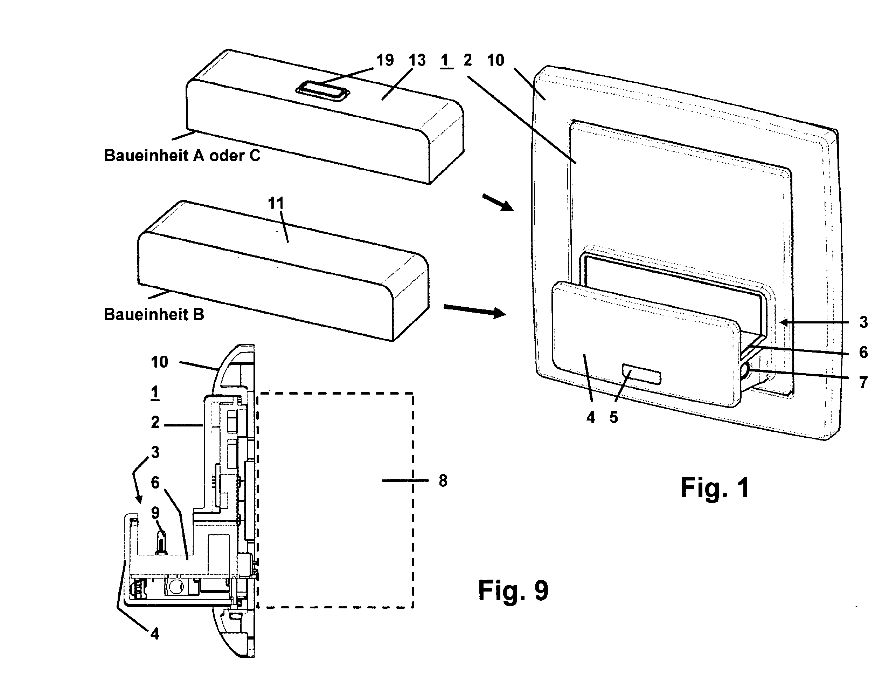

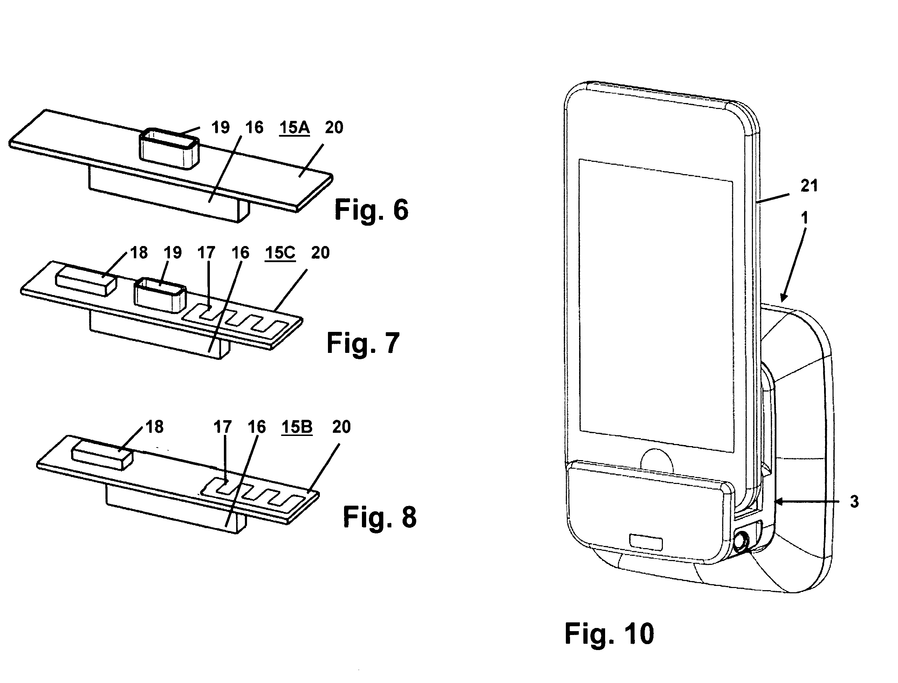

In Fig. 1 ist eine perspektivische Sicht auf ein elektrisches Unterputz-Installationsgerät zur Aufnahme eines mobilen Audio- und Kommunikationsgerätes mit zwei alternativ aufsteckbaren formschlüssigen Abdeckungen dargestellt. Es ist die Frontseite des elektrischen Unterputz-Installationsgerätes 1 mit einer Zentralscheibe 2 zu erkennen, welche eine im Querschnitt U-förmig ausgebildete Halterung 3 mit einem Aufnahmeschacht für ein mobiles Audio- und Kommunikationsgerät aufweist, nachfolgend auch mit "mobiles Audio- und Kommunikationsgerät erster Ausführungsform" bezeichnet. Dabei gibt eine Bodenplatte 6 der Halterung 3 die Höhe des Aufnahmeschachtes für das Audio- und Kommunikationsgerät vor und eine Frontplatte 4 verhindert ein Herausfallen eines eingesteckten Gerätes. Unterhalb der Bodenplatte 6 befindet sich eine Anschlussbuchse 7. In der Frontplatte 4 ist ein IR-Fenster 5 angeordnet. Ein Abdeckrahmen 10 umschließt die Zentralscheibe 2. Nicht zu erkennen ist ein UP-Einsatz des Unterputz-Installationsgerätes, zur Erläuterung des UP-Einsatzes wird auf Ziffer 8 in Figur 8 hingewiesen.

Falls kein mobiles Audio- und Kommunikationsgerät erster Ausführungsform eingesteckt werden soll, kann der Aufnahmeschacht der Halterung 3 mittels verschiedener Abdeckungen abgedeckt werden, nämlich entweder mit einer formschlüssigen Abdeckung 11, nachfolgend auch als zweite Abdeckung respektive "Baueinheit B" bezeichnet, oder mit einer ein Fenster aufweisenden formschlüssigen Abdeckung 13, nachfolgend auch als erste Abdeckung respektive "Baueinheit A" oder "Baueinheit C" bezeichnet. Durch das Fenster ragt eine Micro-USB-Schnittstelle 19. Wie auch aus den nachfolgenden Figuren 6, 7, 8 hervorgeht, kann somit je nach Wunsch eine Baueinheit A oder B oder C auf den Aufnahmeschacht der Halterung 3 aufgesteckt werden.

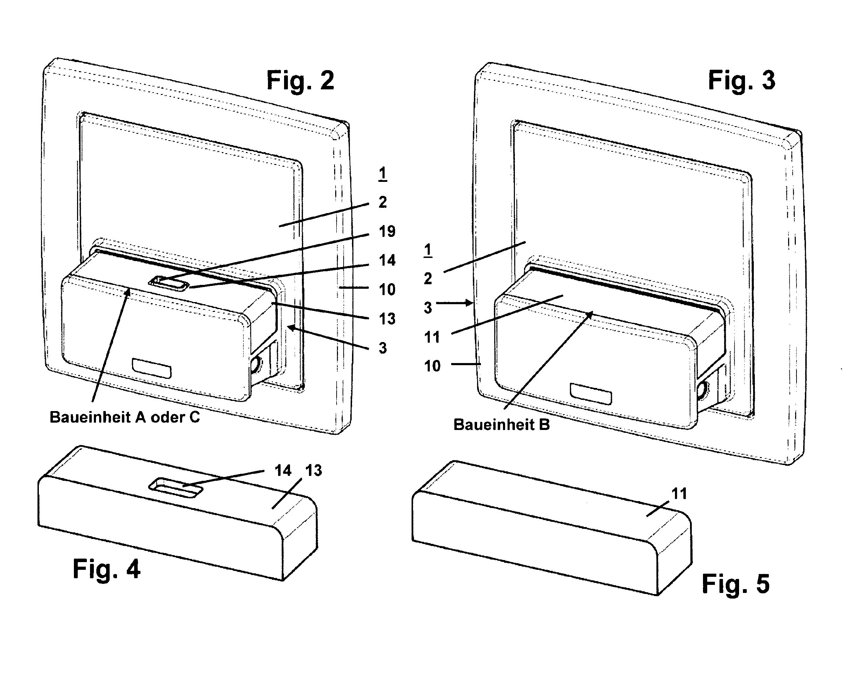

In Fig. 2 ist eine perspektivische Sicht auf ein mit einer ersten formschlüssigen Abdeckung versehenes elektrisches Unterputz-Installationsgerät zur Aufnahme eines mobilen Audio- und Kommunikationsgerätes dargestellt. Es ist eine der Baueinheiten A oder C aufgesteckt. Es ist zu erkennen, dass der Aufnahmeschacht der Halterung 3 mittels der formschlüssigen Abdeckung 13 abgedeckt ist, wobei eine Micro-USB-Schnittstelle 19 durch das Fenster 14 ragt. Das Unterputz-Installationsgerät 1 wird durch die Zentralscheibe 2 und den Abdeckrahmen 10 komplettiert. Zur Erläuterung der Funktion der Micro-USB-Schnittstelle 19 wird auf die Figuren 6 und 7 hingewiesen.

In Fig. 3 ist eine perspektivische Sicht auf ein mit einer zweiten formschlüssigen Abdeckung versehenes elektrisches Unterputz-Installationsgerät zur Aufnahme eines mobilen Audio- und Kommunikationsgerätes dargestellt. Es ist die Baueinheit B aufgesteckt. Es ist zu erkennen, dass der Aufnahmeschacht der Halterung 3 mittels der Abdeckung 11 abgedeckt ist. Das Unterputz-Installationsgerät 1 wird wiederum durch die Zentralscheibe 2 und den Abdeckrahmen 10 komplettiert.

In Fig. 4 ist eine perspektivische Sicht auf eine erste formschlüssige Abdeckung dargestellt. Es ist die mit dem Fenster 14 versehene Abdeckung 13 zu erkennen. In Fig. 5 ist eine perspektivische Sicht auf eine zweite Abdeckung 11 dargestellt. Der einzige Unterschied zwischen beiden formschlüssigen Abdeckungen 11, 13 ist lediglich, dass das Fenster 14 bei Abdeckung 11 entfällt. Zur Verrastung zwischen einer Abdeckung 11, 13 und der Halterung 3 sind einander korrespondierend ausgebildete Rastmittel, z. B. Rastnasen / Raststege - Konfigurationen, vorgesehen.

In Fig. 6 ist eine perspektivische Sicht auf eine mit einer Micro-USB-Schnittstelle versehene Baugruppe 15A dargestellt. Die Micro-USB-Schnittstelle 19 befindet sich auf der Oberseite einer Leiterplatte 20, während auf der Unterseite der Leiterplatte 20 eine Steckvorrichtung 16 angeordnet ist. Die Micro-USB-Schnittstelle 19 ist entweder in Form eines Micro-USB-Steckers oder in Form einer Micro-USB-Buchse ausgebildet und dient zum direkten Aufstecken eines Gerätes oder zum direkten Anschluss eines Kabels mit jeweils korrespondierender Micro-USB-Buchse oder korrespondierendem Micro-USB-Stecker. Die Steckvorrichtung 16 dient zur Verbindung mit der zum Anschluss eines mobilen Audio- und Kommunikationsgerätes dienenden Steckvorrichtung des Unterputz-Installationsgerätes 1, siehe hierzu insbesondere Ziffer 9 der Figur 9.

In Fig. 7 ist eine perspektivische Sicht auf eine Baugruppe 15C dargestellt, mit einer Micro-USB-Schnittstelle 19 und einem auf der Leiterplatte 20 montierten zusätzlichen Funkmodul 18 inklusive zugehöriger Antenne 17. Durch die Konfiguration Funkmodul 18 / Antenne 17 wird eine Funkschnittstelle, z. B. Bluetooth®, zur Datensignalverbindung (Kommunikation) zwischen einem nicht im Unterputz-Installationsgerät 1 befindlichen mobilen Audio- und Kommunikationsgerät, nachfolgend auch mit "mobiles Audio- und Kommunikationsgerät zweiter Ausführungsform" bezeichnet, und dem mit dem Unterputz-Installationsgerät 1 verbundenen Audiosystem ermöglicht.

In Fig. 8 ist eine perspektivische Sicht auf eine mit einem Funkmodul 18 inklusive zugehöriger Antenne 17 versehene Baugruppe 15B dargestellt. Im Unterschied zur Ausführung gemäß Figur 7 ist keine Micro-USB-Schnittstelle vorgesehen.

Die Energieversorgung der Konfiguration Funkmodul 18 / Antenne 17 sowie die Energieversorgung der Micro-USB-Schnittstelle 19 erfolgt stets aus dem Ladegerät des Unterputz-Installationsgerät 1. Somit ist es möglich, ein mit der Micro-USB-Schnittstelle 19 direkt oder über ein USB-Kabel verbundenes externes mobiles Audio- und Kommunikationsgerät zweiter Ausführungsform über das Unterputz-Installationsgerät 1 aufzuladen. Ferner ist eine Kommunikation (d, h. eine Datensignalverbindung) zwischen dem Unterputz-Installationsgerät 1 und dem externen mobilen Audio- und Kommunikationsgerät zweiter Ausführungsform möglich, entweder unmittelbar über die Micro-USB-Schnittstelle 19 oder alternativ über das Funkmodul 18. Bei der Ausführungsform gemäß Fig. 7 sind die Kommunikationssignale respektive Datensignale sowohl via Funkmoduls 18 als auch via Micro-USB-Schnittstelle 19 verfügbar.

Die vorstehend erläuterten Varianten können also sowohl einzeln als auch zusammen in der Abdeckung eingebaut sein, wodurch sich folgende drei unterschiedliche, wahlweise auf den Aufnahmeschacht der Halterung 3 aufsteckbare Baueinheiten ergeben:
- Baueinheit A - quasi einen "USB-Adapter" bildend - bestehend aus Baugruppe 15A mit Steckvorrichtung 16 und Micro-USB-Schnittstelle 19, wie in Fig. 6 gezeigt, und Abdeckung 13 oder
- Baueinheit B - quasi einen Funk-Adapter respektive "Bluetooth®-Adapter" bildend - bestehend aus Baugruppe 15B mit Steckvorrichtung 16 und Konfiguration Funkmodul 18 / Antenne 17, wie in Fig. 8 gezeigt und Abdeckung 11 oder
- Baueinheit C - quasi sowohl einen "USB-Adapter" als auch einen Funk-Adapter respektive "Bluetooth®-Adapter" bildend - bestehend aus Baugruppe 15C mit Steckvorrichtung 16, Micro-USB-Schnittstelle 19 und Konfiguration Funkmodul 18 /Antenne 17, wie in Fig. 7 gezeigt und Abdeckung 13.

Ferner ist es möglich, eine Abdeckung 11 ohne die Baugruppe 15B auf den Aufnahmeschacht der Halterung 3 aufzusetzen. Bei einer derartigen Konfiguration wird ein Staubschutz für den Aufnahmeschacht bewirkt. Die Funktionen "USB-Adapter" und/oder Funk-Adapter respektive "Bluetooth®-Adapter" sind hierbei nicht vorgesehen.

Nach dem Aufsetzen der Baueinheit A auf den Aufnahmeschacht der Halterung 3 wird neben dem Staubschutz zusätzlich das direkte Aufstecken eines externen mobilen Audio- und Kommunikationsgeräts zweiter Ausführungsform oder eines (mit einem externen mobilen Audio- und Kommunikationsgerät zweiter Ausführungsform verbundenen) USB-Kabels ermöglicht.

Nach dem Aufsetzen der Baueinheit B auf den Aufnahmeschacht der Halterung 3 wird neben dem Staubschutz zusätzlich eine Funk-Kommunikation zwischen einem externen (nicht mit dem Unterputz-Installationsgerät 1 kontaktierten) mobilen Audio-und Kommunikationsgerät zweiter Ausführungsform und einem am Unterputz-Installationsgerät 1 (respektive an dessen UP-Einsatz 8) angeschlossenen Audiosystem ermöglicht.

Nach dem Aufsetzen der Baueinheit C auf den Aufnahmeschacht der Halterung 3 wird neben dem Staubschutz zusätzlich das direkte Aufstecken eines externen mobilen Audio- und Kommunikationsgeräts zweiter Ausführungsform oder eines USB-Kabels und eine Funk-Kommunikation zwischen einem externen (nicht mit dem Unterputz-Installationsgerät 1 kontaktierten) mobilen Audio- und Kommunikationsgerät zweiter Ausführungsform und einem am Unterputz-Installationsgerät 1 (respektive an dessen UP-Einsatz 8) angeschlossenen Audiosystem ermöglicht.

In Fig. 9 ist ein Schnitt durch ein elektrisches Unterputz-Installationsgerät zur Aufnahme eines mobilen Audio- und Kommunikationsgerätes erster Ausführungsform dargestellt. Zum Einen zeigt diese Figur 8 die räumliche Zuordnung des vorstehend bereits erwähnten UP-Einsatzes 8 zur Zentralscheibe 2 inklusive Halterung 3 und Abdeckrahmen 10, zum Anderen ist die Halterung 3 mit Bodenplatte 6, Frontplatte 4 und Steckvorrichtung 9 für die Verbindung mit einem mobilen Audio- und Kommunikationsgerät erster Ausführungsform (siehe Ziffer 21 in Fig. 10) gut zu erkennen. Im UP-Einsatz 8 sind ein elektrischer 230V-Anschluss und ein Ladegerät für ein energieoptimiertes Aufladen von mobilen Audio- und Kommunikationsgeräten integriert, ferner wird die Datensignalverbindung (Kommunikation) eines eingesteckten oder externen Audio- und Kommunikationsgerätes mit einem Audiosystem ermöglicht, so dass optional auch ein Audioverstärker und Anschlüsse für externe Lautsprecher für die Beschallung eines Raumes integriert sein können.

Aufgrund der vorgeschlagenen Konfiguration ist eine formschöne Einbindung/Integration des vorgeschlagenen elektrischen Unterputz-Installationsgerätes zur Aufnahme eines mobilen Audio- und Kommunikationsgerätes erster Ausführungsform in ein Installationsgeräte-Unterputz-Programm respektive Schalter- und Steckdosen-Unterputz-Programm sowie eine Kombination mit weiteren Geräten, beispielsweise Schaltern, Tastern, Dimmern, Steckdosen, dieses Schalter- und Steckdosen-Unterputz-Programms möglich. Abdeckrahmen 10 und Zentralscheibe 2 sind gemäß den typischen Merkmalen eines speziellen Schalter- und Steckdosen-Unterputz-Programms gestaltet, während ein und derselbe UP-Einsatz 8 und ein und dieselben Baugruppen 15A oder 15B oder 15C für verschiedene Unterputz-Programme eingesetzt werden können.

In Fig. 10 ist eine perspektivische Sicht auf ein elektrisches Unterputz-Installationsgerät dargestellt, bei welchem ein mobiles Audio- und Kommunikationsgerät erster Ausführungsform 21 eingesteckt ist, d. h. durch die Halterung 3 des Unterputz-Installationsgerät 1 aufgenommen ist. Nachdem das mobile Audio- und Kommunikationsgerät 21 erster Ausführungsform die Steckvorrichtung 9 mittels seiner korrespondierenden Kontaktvorrichtung kontaktiert,
- kann eine Aufladung des Akkumulators des mobilen Audio- und Kommunikationsgerätes 21 bewirkt werden und/oder
- können vom mobilen Audio- und Kommunikationsgerät 21 abgegebene Audiosignale verstärkt werden und die wunschgemäß verstärkten Audiosignale können an externe Lautsprecher abgegeben werden.

Abschließend sind noch die Funktionen des vorstehend erwähnten IR-Fensters 5 (für Infrarotstrahlung durchlässiger Bereich) sowie der erwähnten Anschlussbuchse 7 zu erläutern. Hinter dem IR-Fenster 5 ist ein IR-Empfänger angeordnet und mit dem im UP-Einsatz 8 befindlichen Audioverstärker verbunden. Die Anschlussbuchse 7 dient als Line-In-Eingang (für Klinkenstecker). An die Anschlussbuchse 7 kann eine externe Audio-Anlage angeschlossen werden. Der IR-Empfänger kann Ansteuersignale einer separaten IR-Fernbedienung empfangen, welche beispielsweise zur Einstellung der gewünschten Lautstärke oder des gewünschten Klangbildes oder eines gewünschten Musiktitels dienen.

### Bezugszeichenliste

- 1: elektrisches Unterputz-Installationsgerät zur Aufnahme eines mobilen Audio- und Kommunikationsgerätes erster Ausführungsform
- 2: Zentralscheibe
- 3: Halterung mit Aufnahmeschacht für ein mobiles Audio- und Kommunikationsgerät erster Ausführungsform
- 4: Frontplatte
- 5: IR-Fenster
- 6: Bodenplatte
- 7: Anschlussbuchse
- 8: UP-Einsatz
- 9: Steckvorrichtung für die Verbindung mit dem mobilen Audio- und Kommunikationsgerät
- 10: Abdeckrahmen
- 11: formschlüssige Abdeckung
- 12: ---
- 13: formschlüssige Abdeckung
- 14: Fenster
- 15: 15A, 15B, 15C Baugruppen
- 16: Steckvorrichtung für die Verbindung mit der zum Anschluss eines mobilen Audio- und Kommunikationsgerätes dienenden Steckvorrichtung des Installationsgerätes
- 17: Antenne
- 18: Funkmodul (z. B. für Bluetooth®)
- 19: Micro-USB-Schnittstelle, ausgebildet entweder als Micro-USB-Stecker oder als Micro-USB-Buchse, zum direkten Aufstecken eines mobilen Audio- und Kommunikationsgerät zweiter Ausführungsform oder zum Anschluss eines Kabels mit korrespondierender Micro-USB-Buchse oder korrespondierendem Micro-USB-Stecker
- 20: Leiterplatte
- 21: mobiles Audiogerät erster Ausführungsform
- A, B, C: Baueinheiten

## Patentansprüche

1. Elektrisches Unterputz-Installationsgerät (1) zur Aufnahme eines mobilen Audio- und Kommunikationsgerätes erster Ausführungsform (21),
- mit einem ein Ladegerät und einen elektrischen 230V-Anschluss beinhaltenden UP-Einsatz (8),
- mit einer Zentralscheibe (2) mit Halterung (3) mit Aufnahmeschacht für das mobile Audio- und Kommunikationsgerät erster Ausführungsform (21),
- mit einem Abdeckrahmen (10),
- mit einer im Aufnahmeschacht angeordneten Steckvorrichtung (9) für die Verbindung mit dem mobilen Audio- und Kommunikationsgerät erster Ausführungsform (21),
- wobei eine auf den Aufnahmeschacht aufsteckbare, eine formschlüssige Abdeckung (11, 13) aufweisende Baueinheit (A, B, C) vorgesehen ist, welche eine Steckvorrichtung (16) für die Verbindung mit der zum Anschluss eines mobilen Audio- und Kommunikationsgerätes dienenden Steckvorrichtung (9) aufweist, welche elektrisch mit einer Micro-USB-Schnittstelle (19) und / oder einem Funkmodul (18) inklusive zugeordneter Antenne (17) verbunden ist, wodurch eine Datensignalverbindung mit einem mobilen Audio- und Kommunikationsgerät zweiter Ausführungsform entweder über eine Drahtverbindung oder via Funk ermöglicht ist.

2. Elektrisches Unterputz-Installationsgerät (1) nach Anspruch 1, **dadurch gekennzeichnet, dass** die Micro-USB-Schnittstelle (19) in Form eines Micro-USB-Steckers ausgebildet ist.

3. Elektrisches Unterputz-Installationsgerät (1) nach Anspruch 1, **dadurch gekennzeichnet, dass** die Micro-USB-Schnittstelle (19) in Form einer Micro-USB-Buchse ausgebildet ist.

4. Elektrisches Unterputz-Installationsgerät (1) nach einem der vorstehenden Ansprüche, **dadurch gekennzeichnet, dass** die Bauelemente der Baueinheit (A, B, C), wie Steckvorrichtung (16), Micro-USB-Schnittstelle (19), Funkmodul (18), Antenne (17), auf einer Leiterplatte (20) montiert sind.
